# EUROPÄISCHE PATENTANMELDUNG

(11) **EP 1 320 205 A1**
(43) Veröffentlichungstag der Anmeldung: **18.06.2003**
(21) Anmeldenummer: 01129606.8
(22) Anmeldetag: 12.12.2001
(51) Int. Cl.: H04B 10/155, H04J 14/02

(54) **Verfahren zur Frequenzregelung eines Lasers in einem Frequenzmultiplexübertragungssystem**

(71) Anmelder: Siemens Aktiengesellschaft, 81669 München (DE)
(72) Erfinder: Dietrich, Werner, 1210 Wien (AT)
(74) Vertreter: Peham, Alois, Dipl.-Ing.

(57) **Zusammenfassung**

Es wird ein Verfahren und eine Vorrichtung zur Frequenzregelung eines Lasers in einem Frequenzmultiplexübertragungssystem mit mehreren Kanälen angegeben, bei dem vom Laser ein Nutzsignal und ein Pilotsignal ausgestrahlt wird, und bei dem die Frequenz des Lasers so lange erhöht oder gesenkt wird, bis die Signalpegel des Pilotsignals in zwei Kanälen in einem vorgebbaren Verhältnis stehen, insbesondere gleich groß sind.

## Beschreibung

Die Erfindung betrifft ein Verfahren zur Frequenzregelung eines Lasers in einem Frequenzmultiplexübertragungssystem mit mehreren Kanälen,
- bei dem der Laser einem Kanal zugeordnet wird und
- bei dem vom Laser ein Nutzsignal und ein Pilotsignal ausgestrahlt wird.
   Weiterhin betrifft die Erfindung eine Vorrichtung zur Durchführung des Verfahrens.
   Modulierte Laser werden beispielsweise für die optische Datenübertragung eingesetzt, und zwar sowohl für die Freiraumdatenübertragung, als auch für die Datenübertragung mittels Lichtwellenleiter. Die Daten werden dabei zum Beispiel mit Hilfe eines amplitudenmodulierten Lasers auf mehreren Kanälen nach dem Frequenzmultiplexverfahren übermittelt. Bei dieser Methode werden mehrere Einzelkanäle, die sich hinsichtlich ihrer Übertragungsfrequenz unterscheiden, auf einem gemeinsamen Übertragungsweg gesendet.
   In diesem Zusammenhang wird auch auf den Begriff "Wellenlängenmultiplexverfahren" oder "Wavelength Division Multiplex", kurz WDM, verwiesen.
   Bei diesen Datenübertragungsverfahren ist es wichtig, dass die Frequenz eines Lasers, welcher einem Kanal zugeordnet ist, innerhalb eines vorgegebenen Toleranzbereiches liegt. Aufgrund verschiedener Einflüsse, wie zum Beispiel der Betriebstemperatur oder der Alterung der für den Laser verwendeten Komponenten, kann eine konstante Frequenz ohne zusätzliche Maßnahmen nicht vorausgesetzt werden. Deshalb ist es nötig, ein Regelverfahren anzuwenden, sodass die Frequenz des Lasers innerhalb eines definierten Toleranzbereichs bleibt.
   Nach dem Stand der Technik wird die Sendefrequenz zu diesem Zweck mit Hilfe von geeichten Filtern über eine Regelschleife weitgehend konstant gehalten. Dieses Verfahren ist in "Optical Networks", R. Ramaswami, K. N. Sirarajan, 1988, Margan Kaufmann Publishers, Seite 248, 249 beschrieben. Die Änderungen der Übertragungsstrecke und der Empfangseinrichtungen können auf diese Weise jedoch nicht berücksichtigt werden.
   Aus der DE 0019963803 A1 "Verfahren und Anordnung zur Einstellung der Frequenz eines Sendelasers" vom 26.07.2001 ist auch ein Verfahren bekannt, bei dem empfangsseitig der Pegel eines übertragenen, optischen Datensignals gemessen und über einen Service-Rückkanal zu einer Regeleinrichtung geführt wird, welche die Frequenz des Sendelasers so einstellt, dass die Empfangsleistung einen Maximalwert erreicht. Dieses Verfahren hat jedoch den Nachteil, dass optische Filter mit einem einzigen Minimum in der Mitte des Durchlassbereichs benötigt werden. Die gebräuchlichen Filter weisen häufig jedoch mehrere Minima auf.
   Der Erfindung liegt also die Aufgabe zugrunde, ein Verfahren anzugeben, welches die Frequenzregelung eines Lasers auf besonders einfache Weise ermöglicht.
   Dies geschieht erfindungsgemäß mit einem Verfahren der eingangs erwähnten Art,
- bei dem die Signalpegel des Pilotsignals in zumindest zwei Kanälen empfangsseitig gemessen werden und
- bei dem die Frequenz des Lasers so lange erhöht oder gesenkt wird, bis diese Signalpegel in einem vorgebbaren Verhältnis stehen.

Bei diesem Verfahren wird auf einem Kanal neben dem eigentlichen Nutzsignal zusätzlich ein Pilotsignal vom Laser ausgestrahlt. Für das Pilotsignal werden dabei in der Regel wesentlich kleinere Werte für Amplitude und Frequenz gewählt als für das Nutzsignal, weil auf diese Weise das Nutzsignal durch das Pilotsignal vergleichsweise wenig beeinflusst wird.

Aufgrund des Übersprechens des Pilotsignals auf andere Kanäle ist dieses auch in anderen Kanälen enthalten. Erfindungsgemäß werden die Signalpegel des Pilotsignals in zumindest zwei Kanälen empfangsseitig gemessen. Diese Werte dienen als Eingang für ein Regelmodul, welches die Frequenz des Lasers so lange verändert, bis die Signalpegel in einem vorgebbaren Verhältnis stehen. Ein Vorteil der Erfindung ist, dass hierbei auf Relativgrößen Bezug genommen wird und der Einsatz von Normalen für Absolutwerte, hier Frequenznormalen, in der Regel nicht erforderlich ist.

Vorteilhaft ist es dabei,
- wenn der Laser einem ersten Kanal zugeordnet wird,
- wenn die Signalpegel des Pilotsignals im ersten Kanal und in einem zweiten Kanal empfangsseitig gemessen werden und
- wenn die Frequenz des Lasers so lange erhöht oder gesenkt wird, bis diese Signalpegel in einem vorgebbaren Verhältnis stehen.

Hier wird das Pilotsignal in dem Kanal, welcher dem Laser zugeordnet ist, sowie einem zweiten Kanal, etwa einem hinsichtlich der Übertragungsfrequenz direkt benachbarten Kanal, ausgewertet. Vorteilhaft ist dabei, dass auf diese Weise vergleichsweise hohe Signalpegel zur Verfügung stehen.

Eine besonders vorteilhafte Ausgestaltung der Erfindung ist mit einem Verfahren gegeben,
- bei dem der Laser einem ersten Kanal zugeordnet wird,
- bei dem die Übertragungsfrequenz eines zweiten Kanals über der des ersten Kanals liegt,
- bei dem die Übertragungsfrequenz eines dritten Kanals unter der des ersten Kanals liegt,
- bei dem die Signalpegel des Pilotsignals im zweiten Kanal und im dritten Kanal empfangsseitig gemessen werden und
- bei dem die Frequenz des Lasers so lange erhöht oder gesenkt wird, bis diese Signalpegel in einem vorgebbaren Verhältnis stehen, insbesondere gleich groß sind.

Werden für den zweiten und den dritten Kanal annähernd gleiche Übertragungsverhältnisse angenommen, und haben die beiden Kanäle den gleichen Frequenzabstand zum ersten Kanal, ergibt sich durch die symmetrischen Verhältnisse ein besonders einfaches Regelverfahren. Dabei wird die Frequenz des Lasers so lange verändert, bis die Signalpegel der Pilotsignalanteile im zweiten und im dritten Kanal gleich groß sind. Für den Istwert der Übertragungsfrequenz im ersten Kanal resultiert so im wesentlichen der arithmetische Mittelwert aus der Übertragungsfrequenz im zweiten und der Übertragungsfrequenz im dritten Kanal.

Günstig ist ein Verfahren, bei dem der Signalpegel des Pilotsignals zusätzlich im ersten Kanal gemessen und zur Regelung des Lasers herangezogen wird, insbesondere zur Leistungsregelung des Lasers.

Auf diese Weise kann das erfindungsgemäße Verfahren hinsichtlich der Regelgenauigkeit und/oder Ausfallsicherheit weiter verbessert werden. Beispielsweise kann der Betrieb der Regelung auch dann noch aufrecht erhalten werden, wenn etwa das Pilotsignal im zweiten Kanal nicht mehr gemessen werden kann. In diesem Fall wird die Frequenz des Lasers so lange verändert, bis die gemessenen Signalpegel des Pilotsignals im ersten und im dritten Kanal in einem vorgebbaren Verhältnis stehen.

Das im ersten Kanal gemessene Signal kann vorteilhaft auch zur Leistungsregelung des Lasers herangezogen werden. Dabei werden die Signalpegel des Pilotsignals und des Nutzsignal in Relation zueinander gesetzt.

Vorteilhaft ist es, wenn physikalische Eigenschaften eines Kanals, insbesondere Streckendämpfungen und Filtercharakteristiken, bei der Ermittlung des Pilotsignalpegels berücksichtigt werden. Diese Ausgestaltung des erfindungsgemäßen Verfahrens ermöglicht beispielsweise die Einstellung einer Mittenfrequenz für den Sendelaser, obwohl die Verhältnisse auf benachbarten, hinsichtlich der Übertragungsfrequenz symmetrisch angeordneten, Übertragungskanälen nicht völlig gleich sind.

Günstig ist weiterhin eine Variante der Erfindung, bei der das Frequenzspektrum des Pilotsignals innerhalb des Frequenzbereichs des Nutzsignals weitgehend gleichverteilt ist.

Durch die Anwendung eines solchen Pilotsignals kann das Problem der Beeinflussung durch einzelne Spektrallinien des Nutzsignals auf besonders einfache Weise weitgehend beseitigt werden. Nur die Signalanteile des vom Empfangselement empfangenen Summensignals, die auf das Pilotsignal zurückzuführen sind, ergeben dabei einen wesentlichen Beitrag zum Signal, das für die Regelung des Lasers herangezogen wird. Aus diesem Signalanteil wird dazu beispielsweise ein äquivalentes Maß für die Pilottonamplitude ermittelt. Eine Trennung des Eingangssignals in Nutzsignal und Pilotsignal kann dabei zum Beispiel mit Korrelationstechniken erreicht werden. Durch Wahl eines geeigneten Pilotsignals sollte die Kreuzkorrelation zwischen Nutzsignal und Pilotsignal jedenfalls möglichst gering gehalten werden. Eine solche Signalfolge ist beispielsweise eine Pseudorauschsequenz.

Derartige Verfahren, die eine gegenseitige Beeinflussung von Signalen durch Verbreiterung der zugeordneten Frequenzspektren verringern, sind auch unter dem Begriff "Spread Spectrum Systeme" bekannt.

Günstig ist es weiterhin,
- wenn für das Pilotsignal eine digitale Signalfolge vorgesehen wird oder
- wenn für das Pilotsignal eine Impulsfolge vorgesehen wird, insbesondere eine Impulsfolge mit pseudozufällig verteilten zeitlichen Abständen zwischen den einzelnen Impulsen oder
- wenn für das Pilotsignal ein analoges Signal, insbesondere ein zumindest abschnittsweise sinusförmiges Signal, vorgesehen wird oder
- wenn für das Pilotsignal ein analoges Signal vorgesehen wird, dessen Frequenz fortlaufend variiert wird, insbesondere durch sprungförmige Änderung der Frequenz.

Eine Beispiel für eine Signalfolge ist eine Pseudorauschsequenz, welche so gewählt wird, dass sie eine geringe Kreuzkorrelation zum Nutzsignal aufweist. Durch die Verwendung eines Korrelators zur Demodulation kann das Problem der Beeinflussung durch einzelne Spektrallinien des Datensignals weitgehend beseitigt werden. Die Auswertung im Korrelator besteht dabei im Prinzip aus einer Multiplikation des vom Empfangselement empfangenen Signals mit dem Modulationssignal. Nur die Signalanteile, die auf das Pilotsignal zurückzuführen sind, ergeben einen wesentlichen Beitrag zum Signal, das für die Regelung des Lasers herangezogen wird.

Eine Impulsfolge ist unter anderem deswegen für das erfindungsgemäße Verfahren gut geeignet, weil Impulse ein breites, weitgehend gleichverteiltes Frequenzspektrum aufweisen. Durch eine pseudozufällige Verteilung der zeitlichen Abstände zwischen den einzelnen Impulsen wird überdies eine Korrelation mit dem Nutzsignal nahezu ausgeschlossen. Dieses Verfahren ist auch unter dem Begriff "Time Hopping" bekannt. Um das Pilotsignal aus dem vom Empfangselement empfangenen Summensignal zu erhalten, müssen die zeitlichen Abstände auch beim Empfangselement berücksichtigt werden.

Ein analoges Signal, insbesondere ein zumindest abschnittsweise sinusförmiges Signal, eignet sich vor allem deswegen gut für die Anwendung im erfindungsgemäßen Verfahren, weil auf diese Weise beispielsweise bestehende Schaltkreise zur Erzeugung eines Pilottons vorteilhaft weiterverwendet werden können.

Nach dem Stand der Technik können analoge Signale überdies durch digitale Schaltkreise erzeugt werden. Eine scharfe Trennlinie zwischen reiner Digitaltechnik und Analogtechnik kann an dieser Stelle daher nicht gezogen werden.

Günstig ist es dabei, wenn die Frequenz des Pilotsignals fortlaufend variiert wird, insbesondere durch sprungförmige Änderung der Frequenz. Sprungförmige Änderungen der Frequenz sind beispielsweise auch unter dem Begriff "Frequency Hopping" bekannt. Durch die Variation der Frequenz kann ein Frequenzspektrum beliebiger Breite erhalten werden. Ein Beispiel hierfür ist ein Wobbelsignal, ein im wesentlichen sinusförmiges Signal, dessen Frequenz fortlaufend und stetig geändert wird. Um das Pilotsignal aus dem vom Empfangselement empfangenen Summensignal zu erhalten, muss die jeweilige momentane Frequenz des Pilotsignals auch beim Empfangselement berücksichtigt werden.

Günstig ist es auch, wenn das Pilotsignal mittels rückgekoppelter Schieberegister erzeugt wird. Diese stellen ein erprobtes Mittel zur Herstellung verschiedener digitaler Signalfolgen dar, beispielsweise zur Erzeugung von Pseudorauschsequenzen. Wird das Pilotsignal auf das Nutzsignal aufmoduliert, so werden diese Folgen dabei sowohl für die Modulation des Pilotsignals auf das Nutzsignal, als auch zur Demodulation des vom Empfangselement empfangenen Signals herangezogen. Neben dieser Realisierungsvariante sind prinzipiell auch andere Verfahren aus der Spread Spectrum Technologie bekannt.

Besonders vorteilhaft ist es, wenn nicht der Absolutwert eines Pilotsignalpegels, sondern der auf den Signalpegel eines Nutzsignals in einem Kanal bezogene Pilotsignalpegel zur Regelung herangezogen wird. Durch die Verarbeitung bezogener Werte wird eine stärkere Unabhängigkeit von physikalischen Gegebenheiten erreicht. Beispielsweise spielen unterschiedliche Übertragungsverhältnisse auf den Übertragungskanälen eine vergleichsweise geringe Rolle, da sowohl das Pilotsignal als auch das Nutzsignal den gleichen Verhältnissen unterliegt. Der Relativwert des Signalpegels ist daher auch bei sich ändernden Übertragungsverhältnissen weitgehend konstant.

Eine weitere vorteilhafte Ausgestaltung der Erfindung ist mit einem Verfahren gegeben,
- bei dem ein Pilotsignal aufgrund seiner Charakteristik eindeutig einem Kanal einer Gruppe von verschiedenen Kanälen zugeordnet wird und
- bei dem ein gleichartiges Signal auf keinem anderen Kanal dieser Gruppe ausgesandt wird.

Hierbei ist ein Pilotsignal mit einer bestimmten Charakteristik zu jedem Zeitpunkt eines bestimmten Zeitintervalls genau einem Kanal einer Gruppe von Kanälen zugeordnet, wobei die Gruppe hierbei selbstverständlich auch alle Kanäle des Übertragungssystems umfassen kann. Unter Charakteristik eines Signals sind in diesem Zusammenhang jene Parameterwerte zu verstehen, mit denen das Signal eindeutig bestimmt wird. Für ein reines Sinussignal sind das beispielsweise Amplitude und Frequenz. Andere Signale sind dagegen etwa mit der Bitrate oder dem Bitmuster definiert.

Besonders vorteilhaft ist es auch,
- wenn ein Pilotsignal hinsichtlich seiner Charakteristik einer Gruppe von mehreren verschiedenen Kanälen zugeordnet wird und
- wenn dieses Pilotsignal zeitlich abwechselnd auf je einem Kanal dieser Gruppe gesendet wird.

Zu einem beliebigen Zeitpunkt ist das Pilotsignal also genau einem Kanal einer Gruppe von Kanälen zugeordnet, wobei die Gruppe hierbei selbstverständlich auch alle Kanäle des Übertragungssystems umfassen kann. Auf diese Weise können sowohl vorteilhaft Ressourcen durch die Mehrfachnutzung eingespart, als auch ein besonders einfaches Verfahren zur Auswertung der Pilotsignalpegel, nämlich die Berücksichtigung der erwähnten zeitlichen Zuordnung, herangezogen werden.

Die Aufgabe der Erfindung wird weiterhin mit einer Vorrichtung zur Frequenzregelung eines Lasers in einem Frequenzmultiplexübertragungssystem mit mehreren Kanälen gemäß dem erfindungsgemäßen Verfahren gelöst,
- bei dem der Laser einem Kanal zugeordnet ist,
- bei dem der Laser zur gleichzeitigen Ausstrahlung eines Nutzsignals und eines Pilotsignals vorgesehen ist,
- bei dem Mittel zur empfangsseitigen Messung der Signalpegel des Pilotsignals in zumindest zwei Kanälen vorgesehen sind,
- bei dem die Vorrichtung Mittel zur Veränderung der Frequenz des Lasers umfasst und
- bei dem Mittel zur Begrenzung dieser Veränderung bei Vorliegen eines vorgebbaren Verhältnisses dieser Signalpegel vorgesehen sind.

Die erfindungsgemäße Vorrichtung bietet in vorteilhafter Weise die Möglichkeit, den Einsatz von Frequenznormalen oder Filternormalen zu vermeiden. Eine Frequenzregelung kann daher mit vergleichsweise geringem technischen Aufwand erfolgen. Darüber hinaus gelten die beim erfindungsgemäßen Verfahren erwähnten Vorteile in analoger Weise auch für die Vorrichtung.

Vorteilhaft ist es weiterhin, wenn für die Selektion des Pilotsignals ein auf dessen Übertragungsfrequenz abgestimmtes, optisches Filter vorgesehen ist.

Eine weitere vorteilhafte Ausgestaltung der Erfindung ist auch mit einer Vorrichtung gegeben, bei der Mittel vorhanden sind, das Pilotsignal auf elektrischem Weg von anderen Signalen zu trennen. Das ist durch elektrische Filterung möglich, beispielsweise wenn ein Pilotsignal aufgrund seiner Charakteristik eindeutig einem Kanal einer Gruppe von verschiedenen Kanälen zugeordnet wird und ein gleichartiges Signal auf keinem anderen Kanal dieser Gruppe ausgesandt wird oder wenn ein Pilotsignal hinsichtlich seiner Charakteristik einer Gruppe von mehreren verschiedenen Kanälen zugeordnet wird und dieses Pilotsignal zeitlich abwechselnd auf je einem Kanal dieser Gruppe gesendet wird.

Günstig ist es auch, wenn die Vorrichtung Mittel zur Messung des Pilotsignalpegels in dem Kanal, welcher dem Laser zugeordnet ist, und Mittel zur Regelung des Lasers aufgrund dieses Signalpegels vorgesehen sind, insbesondere auch Mittel zur Leistungsregelung des Lasers. Diese Ausgestaltung der Erfindung bietet einen Mehrfachnutzen, da hierbei durch Messung des Signalpegels des Pilotsignals sowohl die Frequenz als auch die Leistung des Lasers geregelt werden kann.

Eine günstige Variante der Erfindung ist gegeben, wenn die Vorrichtung Mittel zur empfangsseitigen Demodulation des vom Laser ausgestrahlten Signals umfasst. Um das im Eingangssignal enthaltene Pilotsignal vom Nutzsignal zu trennen, werden vorteilhaft Demodulatoren, abgestimmt auf die jeweilig angewandte Modulationstechnik, eingesetzt. Ein Beispiel hierfür ist ein Korrelator, der das Eingangssignal mit dem Pilotsignal multipliziert und so das Pilotsignal vom Nutzsignal weitgehend trennt.

Günstig ist es weiterhin, wenn die Vorrichtung Mittel zur empfangsseitigen Filterung des vom Laser ausgestrahlten Signals umfasst, insbesondere Filter mit variabler Filtercharakteristik. Durch die Verwendung derartige Filter wird die Möglichkeit geschaffen, das Filter optimal an die Frequenz des gesendeten Pilotsignals anzupassen. Wird für das Pilotsignal beispielsweise ein Wobbelsignal vorgesehen, also ein im wesentlichen sinusförmiges Signal, dessen Frequenz fortlaufend und stetig geändert wird, kann so die Filterfrequenz entsprechend der momentanen Frequenz des Pilotsignals angepasst werden.

Die Erfindung wird anhand eines in der Figur dargestellten Ausführungsbeispiels näher erläutert, welches eine beispielhafte Vorrichtung für ein Frequenzregelverfahren für einen Laser in einem Mehrkanalübertragungssystem mit vier Kanälen betrifft.

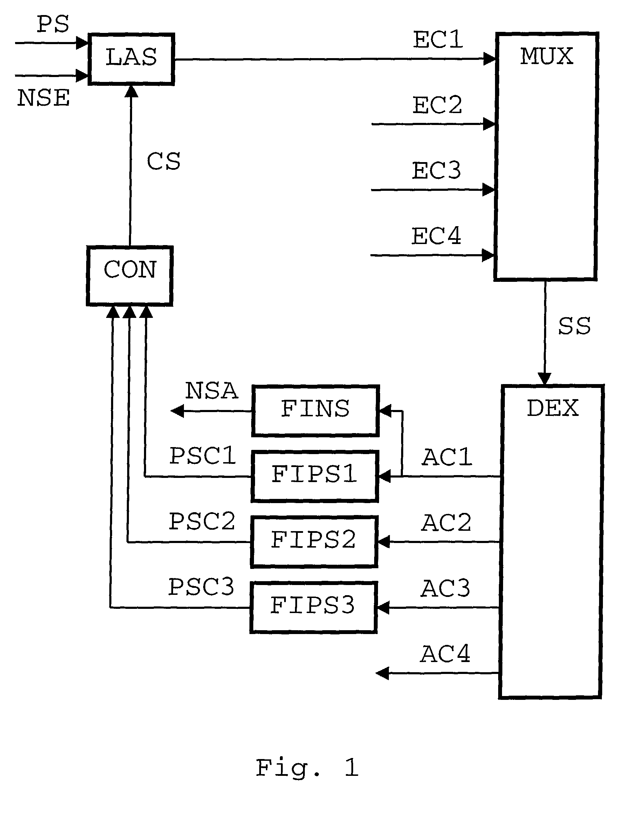

Figur 1 zeigt einen Laser LAS, einen Multiplexer MUX, einen Demultiplexer DEX, ein Nutzsignalfiltermodul FINS und ein erstes, ein zweites und ein drittes Pilotsignalfiltermodul FIPS1, FIPS2 und FIPS3, sowie ein Regelmodul CON.

Für den Laser LAS sind ein Pilotsignal PS und ein Nutzeingangssignal NSE als Eingangssignale, das erste Kanaleingangssignal EC1 als Ausgangssignal vorgesehen. Weiterhin umfasst der Laser LAS einen Eingang für ein Frequenzstellsignal CS.

Der Multiplexer MUC umfasst einen Eingang für das erste Kanaleingangssignal EC1, sowie weitere Eingänge für ein zweites bis viertes Kanaleingangssignal EC2..EC4. Als Ausgangssignal ist ein Ausgangssummensignal SS vorgesehen.

Der Demultiplexer DEX umfasst einen Eingang für das Ausgangssuimriensignal SS. Als Ausgangssignale sind ein erstes bis viertes Kanalausgangssignal AC1..AC4 vorgesehen.

Das Nutzsignalfiltermodul FINS umfasst einen Eingang für das erste Kanalausgangssignal AC1, sowie einen Ausgang für das Nutzausgangssignal NSA. Das erste Pilotsignalfiltermodul FIPS1 umfasst einen Eingang für das erste Kanalausgangssignal AC1, sowie einen Ausgang für den Pilotsignalanteil des ersten Kanals PSC1, das zweite Pilotsignalfiltermodul FIPS2 umfasst einen Eingang für das zweite Kanalausgangssignal AC2, sowie einen Ausgang für den Pilotsignalanteil des zweiten Kanals PSC2 und das dritte Pilotsignalfiltermodul FIPS3 umfasst einen Eingang für das dritte Kanalausgangssignal AC3, sowie einen Ausgang für den Pilotsignalanteil des dritten Kanals PSC3.

Die Pilotsignalanteile des ersten bis dritten Kanals PSC1..PSC3 dienen als Eingangsignale für das Regelmodul CON. Für das Ausgangssignal des Regelmoduls CON ist das Frequenzstellsignal CS vorgesehen.

Die Funktion der in der Figur gezeigten Vorrichtung ist wie folgt.

Das Nutzeingangssignal NSE beinhaltet die Daten, welche vom Laser LAS übermittelt werden sollen. Das Pilotsignal PS dient dagegen für die Regelung des Lasers LAS, beispielsweise für die Frequenzregelung und die Leistungsregelung. Letztere ist aber nicht Bestandteil des erfindungsgemäßen Verfahrens und wird daher nicht näher betrachtet. In Folge wird der Laser LAS mit diesen beiden Signalen moduliert und strahlt beide auf der Übertragungsfrequenz des ersten Kanals aus. Dieses ausgestrahlte Signal wird durch das erste Kanaleingangssignal EC1 symbolisiert.

Mit Hilfe des Multiplexers MUX werden mehrere Kanaleingangssignale, im gezeigten Beispiel ein erstes bis viertes Kanaleingangssignal EC1..EC4, zusammengefasst und als Summensignal SS weitergereicht. Die einzelnen Kanaleingangssignale unterscheiden sich dabei hinsichtlich ihrer Übertragungsfrequenz, beziehungsweise Übertragungswellenlänge.

Das Summensignal SS wird beim Demultiplexer DEX empfangen und wieder in die einzelnen Kanalausgangssignale, im gezeigten Beispiel in das erste bis vierte Kanalausgangssignal AC1..AC4 aufgeteilt und ausgegeben. Das erste Kanalausgangssignal AC1 beinhaltet dabei das vom Laser übermittelte Nutz- und Pilotsignal PS und NSE. Diese beiden Signale können - wenn auch mit weitaus geringerem Signalpegel - in anderen Kanalausgangssignalen gemessen werden. Der Grund hierfür ist das Übersprechen eines Signals eines Kanals auf andere Kanäle, während das Signal die Übertragungsstrecke durchläuft. Im gezeigten Beispiel soll die Übertragungsfrequenz des zweiten Kanals über der des ersten Kanals liegen, die des dritten Kanals unter der des ersten Kanals. Es wird ferner angenommen, dass der zweite und der dritte Kanal hinsichtlich der Übertragungsfrequenz direkt an den ersten Kanal grenzen, die einzelnen Übertragungsbänder also aufeinander folgen.

In Folge wird das erste Kanalausgangssignal AC1 mit Hilfe des Nutzsignalfiltermoduls FINS und des ersten Pilotsignalfiltermoduls FIPS1 in das Nutzsausgangssignal NSA und den Pilotsignalanteil im ersten Kanal PSC1 aufgeteilt. Des weiteren werden der Pilotsignalanteil im zweiten Kanal PSC2 mit Hilfe des zweiten Pilotsignalfiltermoduls FIPS2 und der Pilotsignalanteil im dritten Kanal PSC3 mit Hilfe des dritten Pilotsignalfiltermoduls FIPS3 ermittelt.

Die Pilotsignalanteile im ersten bis dritten Kanal PSC1..PSC3 werden nun an das Regelmodul CON weitergereicht und dort der Pegel des jeweiligen Signalanteils ermittelt. Im gezeigten Beispiel wird angenommen, dass die Laserfrequenz mit Hilfe des Regelmoduls CON über das Frequenzstellsignal CS so beeinflusst wird, dass die Pegel der Pilotsignalanteile im zweiten und dritten Kanal PSC2 und PSC3 gleich groß sind. Für die Laserfrequenz und damit die Übertragungsfrequenz im ersten Kanal ergibt sich daher im wesentlichen das arithmetische Mittel zwischen den Übertragungsfrequenzen des zweiten und dritten Kanals, vorausgesetzt, dass die Signalanteile im zweiten und dritten Kanal während des Übertragungsweges gleich beeinflusst werden. Liegt dagegen eine asymmetrische Beeinflussung vor, so kann als Sollwert für das Regelmodul CON ein anderes Verhältnis der Pegel der Pilotsignalanteile im zweiten und dritten Kanal PSC2 und PSC3 vorgegeben werden, um die Laserfrequenz wieder auf das angeführte arithmetische Mittel regeln zu können.

Die Auswertung des Pilotsignalanteils des ersten Kanals PCS1 erfolgt im gezeigten Beispiel um einen weiteren Parameter für die Regelung der Laserfrequenz zu erhalten, aber etwa auch um die Leistung des Lasers LAS zu regeln. Das Pilotsignal PS weist dabei vorzugsweise ein breites Frequenzspektrum auf.

Das angeführte Verfahren ist selbstverständlich nicht nur auf drei Kanäle beschränkt, sondern kann beliebig ausgeweitet werden. Auf jedem Kanal werden dabei in der Regel ein Pilotsignal und ein Nutzsignal übertragen. Auf jeden Kanal wird das angeführte Verfahren daher in analoger Weise angewandt.

Für den untersten und obersten Kanal eines Übertragungsfrequenzbereichs kann das erfindungsgemäße Verfahren beispielsweise in der Form durchgeführt werden, dass als Sollwert für das Regelung ein bestimmtes Verhältnis der Pegel der Pilotsignalanteile im zu regelnden und in einem benachbarten Kanal vorgegeben wird. Der Einsatz von Frequenznormalen ist daher in der Regel nicht erforderlich.

## Patentansprüche

1. Verfahren zur Frequenzregelung eines Lasers in einem Frequenzmultiplexübertragungssystem mit mehreren Kanälen,
- bei dem der Laser einem Kanal zugeordnet wird und
- bei dem vom Laser ein Nutzsignal und ein Pilotsignal ausgestrahlt wird,
**dadurch gekennzeichnet,**
- **dass** die Signalpegel des Pilotsignals in zumindest zwei Kanälen empfangsseitig gemessen werden und
- **dass** die Frequenz des Lasers so lange erhöht oder gesenkt wird, bis diese Signalpegel in einem vorgebbaren Verhältnis stehen.

2. Verfahren nach Anspruch 1, **dadurch gekennzeichnet,**
- **dass** der Laser einem ersten Kanal zugeordnet wird,
- **dass** die Signalpegel des Pilotsignals im ersten Kanal und in einem zweiten Kanal empfangsseitig gemessen werden und
- **dass** die Frequenz des Lasers so lange erhöht oder gesenkt wird, bis diese Signalpegel in einem vorgebbaren Verhältnis stehen.

3. Verfahren nach Anspruch 1, **dadurch gekennzeichnet,**
- **dass** der Laser einem ersten Kanal zugeordnet wird,
- **dass** die Übertragungsfrequenz eines zweiten Kanals über der des ersten Kanals liegt,
- **dass** die Übertragungsfrequenz eines dritten Kanals unter der des ersten Kanals liegt,
- **dass** die Signalpegel des Pilotsignals im zweiten Kanal und im dritten Kanal empfangsseitig gemessen werden und
- **dass** die Frequenz des Lasers so lange erhöht oder gesenkt wird, bis diese Signalpegel in einem vorgebbaren Verhältnis stehen, insbesondere gleich groß sind.

4. Verfahren nach Anspruch 3, **dadurch gekennzeichnet, dass** der Signalpegel des Pilotsignals zusätzlich im ersten Kanal gemessen und zur Regelung des Lasers herangezogen wird, insbesondere zur Leistungsregelung des Lasers.

5. Verfahren nach einem der Ansprüche 1 bis 4, **dadurch gekennzeichnet, dass** nicht der Absolutwert eines Pilotsignalpegels, sondern der auf den Signalpegel eines Nutzsignals in einem Kanal bezogene Pilotsignalpegel zur Regelung herangezogen wird.

6. Verfahren nach einem der Ansprüche 1 bis 5, **dadurch gekennzeichnet,**
- **dass** ein Pilotsignal aufgrund seiner Charakteristik eindeutig einem Kanal einer Gruppe von verschiedenen Kanälen zugeordnet wird und
- **dass** ein gleichartiges Signal auf keinem anderen Kanal dieser Gruppe ausgesandt wird.

7. Verfahren nach einem der Ansprüche 1 bis 5, **dadurch gekennzeichnet,**
- **dass** ein Pilotsignal hinsichtlich seiner Charakteristik einer Gruppe von mehreren verschiedenen Kanälen zugeordnet wird und
- **dass** dieses Pilotsignal zeitlich abwechselnd auf je einem Kanal dieser Gruppe gesendet wird.

8. Vorrichtung zur Frequenzregelung eines Lasers in einem Frequenzmultiplexübertragungssystem mit mehreren Kanälen gemäß einem Verfahren nach Anspruch 1 bis 7,
- bei dem der Laser einem Kanal zugeordnet ist und
- bei dem der Laser zur gleichzeitigen Ausstrahlung eines Nutzsignals und eines Pilotsignals vorgesehen ist,
**dadurch gekennzeichnet,**
- **dass** Mittel zur empfangsseitigen Messung der Signalpegel des Pilotsignals in zumindest zwei Kanälen vorgesehen sind,
- **dass** die Vorrichtung Mittel zur Veränderung der Frequenz des Lasers umfasst und
- **dass** Mittel zur Begrenzung dieser Veränderung bei Vorliegen eines vorgebbaren Verhältnisses dieser Signalpegel vorgesehen sind.

9. Vorrichtung Anspruch 8, **dadurch gekennzeichnet, dass** für die Selektion des Pilotsignals ein auf dessen Übertragungsfrequenz abgestimmtes, optisches Filter vorgesehen ist.

10. Vorrichtung nach einem der Ansprüche 8 bis 9, **dadurch gekennzeichnet, dass** Mittel zur Messung des Pilotsignalpegels in dem Kanal, welcher dem Laser zugeordnet ist, und Mittel zur Regelung des Lasers aufgrund dieses Signalpegels vorgesehen sind, insbesondere auch Mittel zur Leistungsregelung des Lasers.
